# EUROPEAN PATENT SPECIFICATION

(11) **EP 3 754 235 B1**
(45) Date of publication and mention of the grant of the patent: **11.09.2024**
(21) Application number: 20180602.3
(22) Date of filing: 17.06.2020
(51) Int. Cl.: F16K 17/19, F16K 37/00, G01M 13/00, G01M 13/003

(54) **A METHOD AND DEVICE FOR IN-SITU TESTING A VACUUM-PRESSURE VALVE OF A STORAGE TANK**
VERFAHREN UND VORRICHTUNG ZUR IN-SITU-PRÜFUNG EINES VAKUUMDRUCKVENTILS EINES LAGERTANKS
PROCEDE ET DISPOSITIF POUR TESTER IN SITU UNE SOUPAPE DE VIDE-PRESSION D'UN RESERVOIR

(30) Priority: 17.06.2019 NL 2023322
(43) Date of publication of application: 23.12.2020
(73) Proprietor: Luijben, Martinus Petrus Maria, 2136 KX Zwaanshoek (NL)
(72) Inventor: Luijben, Martinus Petrus Maria, 2136 KX Zwaanshoek (NL)
(74) Representative: Plaggenborg, Menko Bernard

(56) References cited:
- JP-A- H0 875 611
- JP-A- S63 251 699
- JP-A- S63 269 034
- JP-U- S5 886 547

## Description

The present invention relates to a method for testing a valve according to the preamble of claim 1. The invention also relates to a method for testing a vacuum / pressure relief valve according to claim 3. In particular, the invention is directed to an in-situ test method that can be performed without removing the valve and valve housing from the tank.

Vacuum / pressure valves to which the present invention focuses are often provided on storage tanks to protect them from excessive overpressure and underpressure. For this reason, two valves are provided at all times: a first valve for protection against underpressure (often referred to as vacuum) in the storage tank and a second valve for protection against overpressure in the storage tank. Both valves are jointly housed in a valve housing (also referred to as an appendage). However, the invention is not limited to its use in storage tanks.

Known valves are, for example, in the form of a plate-like valve which is seated in a sealing manner on a seat, generally a circular flange. Because of the known weight of the plate and the surface and diameter of the flange, it is known what force or pressure is required to lift the plate. The method used in the art to test the operation of a vacuum / pressure valve consists of mechanically lifting or pressing the plate upwards and measuring the force required for this. This is an indication of the pressure at which the vacuum / pressure valve operates.

Such a known method of testing is imprecise because it does not measure the actual behavior under negative pressure or overpressure, but it measures a known quantity which can be assumed to not change in any case, namely the weight of the sealing plate. With this test method it is therefore not known with certainty whether the valve performs its function correctly at all times.

According to another method, the entire fitting or appendage placed on the roof of a storage tank and containing the valves is removed and examined on a test bench for correct operation of the valves. This has the disadvantage that a lot of time and manpower is required to check the valves for correct operation. In addition, removing, transporting and replacing the fitting can lead to damage to the valves, which cannot be checked.

Reference is made to JP S63269034A relating to a test device for measuring a pressure, wherein the device is positioned between the valve housing comprising the valve to be tested and an inner side of the tank on which said valve to be tested is connected. So as to be able to use this test device, the valve housing must be detached from the tank body. After completion of the measurements, the device must be removed.

JP S58 86547U relates to a safety valve for measuring the pressure in a body. There is no indication of a test valve or its position.

JP S63 251699A teaches a check valve mechanism that must be positioned between a valve to be tested and a storage tank. The pressure in this space between the valve to be tested and the storage tank is increased during testing.

No other method is known in the art for testing the operation of a vacuum / pressure valve. In particular, no method is known for testing both the vacuum valve and the pressure valve on site in operational condition.

The object of the invention is to provide an improved method of the type mentioned in the preamble.

In particular, the object of the invention is to provide a method of the type mentioned in the preamble which tests the behavior of a valve under conditions which can be directly and without conversion traceable to behavior under operating conditions.

In addition, it is an object of the invention to provide a method which can be carried out without having to disassemble or remove the valve or the entire fitting (also referred to as appendage or valve housing) containing both valves from the roof.

Another object of the invention is to provide an improved device of the type described above.

To achieve at least one of the aforementioned objects, the invention according to a first embodiment provides a method comprising the features of claim 1. This method has the advantage that the test is carried out under conditions corresponding to the operational use of the valve, so that a correct and accurate picture of the operation is obtained at all times.

It has also been found that the method according to the invention can be carried out faster and cheaper, with a significantly lower risk of failure of the vacuum / pressure valve. Namely, with the present invention, manipulation of the pressure valve and the vacuum valve is not necessary, in contrast to the methods known in the art in which the valve chamber is opened to manually operate the valves. Such a synergistic effect offers a great advantage.

The lack of alternatives is remarkable, since current methods of testing valves have been in use for at least fifty years. In particular, those known methods require disassembly of the valve housings in order to carry out the tests in overhaul workshops. Being able to carry out the tests in situ is a major economic advantage for both the test authority and the user of the storage tank.

The invention therefore relates to a method for testing a valve, for example a blowdown valve or a vacuum / pressure relief valve, in a valve housing on a storage tank, the valve having a first side and an opposite second side, wherein the method includes the steps of:
- sealing at least the valve to be tested gas-tight on the first side with a test valve, forming a test space between the test valve and the valve,
- applying an increasing pressure difference between the test space and the second side, and
- measuring and recording the pressure in the test space until the valve is opened,
characterized in that the first side is towards the outside of the housing. This method offers the possibility to check the operation of each of the said valves directly on the roof of the storage tank. The test valve can have different embodiments. This can be a shut-off valve to be placed on a first side of a valve to form a seal from the valve to the environment. The shut-off valve can be placed on the outside as well as on the inside of the valve housing, and is towards the outside of the housing compared to the position of the valve to be tested. Installation on the outside is usually simpler. In that case, to provide a simple pressure measurement, it is preferred that the inside of the valve housing (which is in fluid communication with the contents of the storage tank during operation of the storage tank) is in direct fluid communication with the environment. For example, a flange provided on the valve housing can be opened to provide such a connection. The pressure in the valve housing is then equal to the ambient pressure, making it easier to measure the differential pressure at which the valve under test is opened.

The invention has the particular advantage that only one overpressure source is sufficient to test both a vacuum valve and a pressure relief (i.e. overpressure) valve in a valve housing. The test valve can be placed on the outside of the valve housing to form a test space between the vacuum valve and the environment. The test area is located on the first side of the vacuum valve. By applying an increased pressure in the test space, a pressure difference is obtained with the second side, which in this case is the inside of the valve housing. A valve in the valve housing can be opened to equalize the pressure in the valve housing with the ambient pressure, making it easy to measure the pressure difference at which the vacuum valve opens.

Similarly, with the invention, an overpressure source is sufficient to test an overpressure valve in a valve housing. The test valve can be placed on the inside of the valve body to form a test space between the pressure relief valve and the environment. The test area is located on the first side of the vacuum valve. By applying an increased pressure in the test space, a pressure difference is obtained with the second side, which in this case is the outside of the valve housing. This makes it easy to measure the differential pressure at which the pressure relief valve opens.

This method is equally applicable to the application of a vacuum or underpressure in the test space with respect to the second side, for example with respect to the environment. For this purpose, when testing a vacuum valve, the test space will have to be formed on the inside of the valve housing and, when testing an overpressure valve, the test space will have to be formed on the outside of the valve housing. The advantage of applying negative pressure is that a relief valve can also be tested easily by forming the test area on the outside.

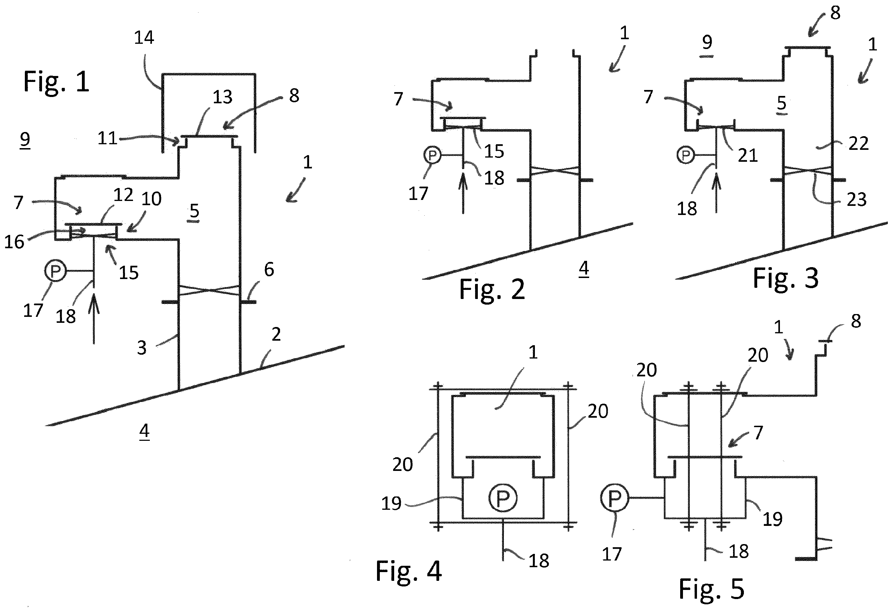

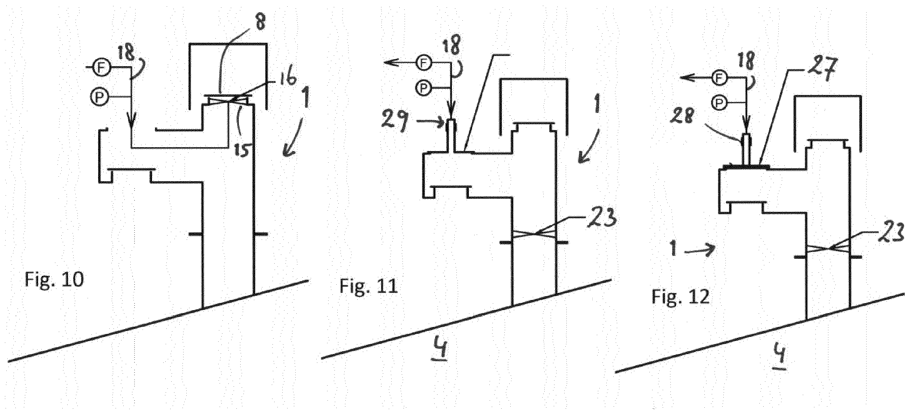

To form the test space, the method of the invention may include the use of a sealing flange placed in an entrance to the vacuum valve or pressure relief valve (Fig. 1, Fig. 10), but may also include the use of a fluid coupling that can be placed on an inlet of a valve housing (Fig. 11), or optionally a flange with a fluid coupling (Fig. 12) that is mounted on the valve housing. An overpressure or underpressure can be applied to the inside of the valve housing via the fluid coupling. When using the fluid coupling, the connection between the valve housing and the storage tank will have to be closed in order to be able to form a pressure difference between the inside of the valve housing and the environment in a simple and rapid manner. The pressure relief valve is tested by first gradually applying an increasing overpressure to the inside of the valve housing. The pressure relief valve will open when the overpressure is sufficiently applied. This is the pressure at which the applied pressure does not increase further or even decrease due to the opening of the pressure relief valve. The vacuum valve is then tested by gradually applying an increasing negative pressure in the valve housing. The vacuum valve will open when the negative pressure is applied sufficiently. This is the pressure at which the applied pressure does not decrease further or even increase due to the opening of the vacuum valve.

According to an alternative of the method according to the invention, the method comprises the steps of:
- sealing at least a part of the valve housing gastight with the test valve to the environment, in particular between the environment and the vacuum valve or between the environment and the pressure valve or between the environment and a release valve,
- creating an increasing pressure difference between the test space defined by the test valve and the valve housing and a space on the inside of the valve housing, and
- measuring and recording the pressure in the test space until a valve of the vacuum valve or the pressure valve or the release valve is opened. By closing off the access to the valve from the environment, a pressure in the space defined by the test valve on the outside of the valve housing can be set to an overpressure or underpressure. With an underpressure in that space (in relation to the pressure in the storage space) the operation of a pressure relief valve can be checked while with an overpressure in that space (in relation to the pressure in the storage space) the operation of a vacuum valve can be checked.

In a corresponding manner it is possible to measure or register the pressure change within the test space with respect to the environment, so that an indication is obtained at which pressure difference the vacuum valve or pressure valve opens. In this method in which a relative pressure difference between the test space and the environment is measured or recorded, it may be preferable that the pressure in the valve housing is set equal to the ambient pressure, especially when the test valve covers the entire valve housing with vacuum and pressure valve on the storage tank, as will be described below and in claim 2. The method according to the invention is therefore applicable to vacuum / pressure valves as well as safety valves and release valves which are used in a variety of storage tanks.

The invention also relates to embodiments in which absolute or relative pressures are measured and recorded. Wherever reference is made in this description to measuring a pressure, both the measurement of an absolute pressure and the measurement of a relative pressure are meant, for example with respect to the ambient pressure, or a pressure difference between the pressure on the first side and the pressure on the second side, unless it is clear from the description that only one of the two is applicable.

More particularly, the invention relates to a method for testing a vacuum / pressure relief valve in a valve housing on a storage space, characterized in that this method comprises the step of:
- sealing at least a part of the valve housing gastight with the test valve to the environment, in particular between the environment and the vacuum valve or between the environment and the pressure valve or between the environment and a release valve,
- creating an increasing pressure difference between the test space defined by the test valve and the valve housing and a space on the inside of the valve housing, and
- measuring and recording the pressure in the test space until a valve of the vacuum valve or the pressure valve or the release valve is opened.

This method according to the invention in its various variants and alternatives offers the possibility, in particular in the case of appliances containing a vacuum valve and a pressure relief valve, to perform joint checks without having to remove the appendage from the roof or to disassemble parts of the appendage. A test valve is placed around the fitting, i.e. the appendage or valve housing, which shields the pressure valve and the vacuum valve from the environment so that an overpressure or under pressure within the test valve activates the vacuum valve or the pressure valve, respectively, so that its correct operation can be verified.

According to a preferred embodiment, the invention relates to a method for testing a vacuum / pressure relief valve having a valve housing located on a storage space, the valve housing (1) having an interior space (5), the method characterized in that it comprises the following steps in random order:
I:
   - sealing gas-tight from the environment (9) a first side of the vacuum valve (7) in contact with the environment (9) using a test valve (15),
   - applying an increasing overpressure in a test space (16) defined by the test valve (15) and the vacuum valve (7) wherein said overpressure is higher than a pressure in the valve housing (1) at a second side of the vacuum valve (7) in contact with the interior space (5) of the valve housing (1), and
   - measuring and recording the pressure in the test space (16) until the vacuum valve (7) is opened,
   and
II:
   - sealing off gas-tight a supply pipe (3) which connects the storage space (4) with the interior space (5) of the valve housing (1),
   - applying an increasing overpressure at a second side of the pressure valve (8) in contact with the interior space (5) of the valve housing (1), wherein the overpressure is higher than a pressure at a first side of the pressure valve (8) in contact with the environment (9), and
   - measuring and recording the pressure in the interior space (5) of the valve housing (1) until the pressure valve (8) is opened. This method provides an accurate and simple measurement of the pressure at which the valve opens. Both in case of the vacuum valve, which allows air from outside to flow into the valve housing when there is a predetermined degree of negative pressure in the valve housing, and in case of the pressure relief valve, which allows air to flow from the valve housing out of the valve housing when there is a predetermined amount in the valve housing degree of overpressure, this provides a very accurate determination of the values at which the valve opens. By measuring the pressure in the test space and in the environment, a value of a relative pressure difference at which the valve opens is easily obtained. Compared to the currently used method of lifting the valve to measure the force to lift the valve from the seat or to open a valve in some other way to allow gas to pass, a force is not measured but the gas pressure is measured which is necessary to open the valve. By comparing that value of the gas pressure obtained according to the present invention with the gas pressure on the other side of the valve, an exact indication of the operation of the valve is obtained, which corresponds to the practical behavior of the valve.

For example, in order to allow the comparison to take place directly, it is preferred within the method according to the invention that it also comprises in step I the measurement and registration of the pressure in the interior space of the valve housing, for example in step I on the second side of the vacuum valve as mentioned above. This gives the absolute pressure difference at which the vacuum valve opens.

Similarly, it is preferred that the method also includes, for example in step II, measuring and recording the pressure in the environment outside the valve housing. This gives the absolute pressure difference at which the pressure valve opens.

The method according to the invention can test both valves in a continuous process. First the vacuum valve is tested and then the pressure valve. To this end, according to the invention, prior to step I, the supply of a space whose pressure is to be monitored to the valve housing is shut off, after which step I is first carried out and then step II is carried out in a continuous manner. When step I is performed until the vacuum valve opens due to the higher pressure on the outside than on the inside, i.e. in the valve housing, the pressure in the valve housing will slowly increase. Namely, the pressure built up in the test room is released to the valve housing. When the pressure in the valve housing has a certain overpressure with respect to the pressure in the environment, i.e. on the outside of the valve housing, the pressure valve will open. The pressure difference between the pressure in the valve housing and the pressure in the environment is the pressure difference at which the pressure valve opens in the event of a pressure increase in the room to be monitored. The space to be monitored is usually a storage tank, such as are conventionally used for the storage of liquids.

The method according to the invention is simple to carry out when the vacuum valve is placed on or on a flange, which is a frequently occurring embodiment in practice. The access from the inlet side, also called the outside, of the valve housing to the vacuum valve in that case comprises a flange connection. In that case, the method comprises sealing gas-tight with the test valve in step I and placing a pipe plug or balloon valve in the flange.

If a different shape is provided, or if the flange unexpectedly offers too little space for a valve to be placed on a flange, it is also possible within the method according to the present invention, in order to provide a gas-tight closure with the test valve in step I, to place on the outside of the valve housing a pressure-tight housing around the access to the vacuum valve. This also results in a gastight seal between the vacuum valve and the environment, so that the vacuum valve will open at a certain pressure when the pressure in the test space formed by the housing is increased.

Simple positioning of the housing can be achieved when the method further comprises clamping the pressure-tight housing against the valve housing.

For example, it is possible within the method to place the clamp around the valve housing, whereby a simple and secure positioning is obtained.

As will be apparent from this description, the invention relates particularly to a method as mentioned above and below, comprising in-situ testing of at least one of a vacuum valve and pressure valve on a roof of a storage tank. This method has the advantage that the valve housing does not have to be disassembled, removed, or disconnected to test the valves. A particularly great advantage is that the valves are tested in operating condition, so that an exact indication of the release pressure is obtained, i.e. the pressure at which the vacuum valve or the pressure valve opens.

In another aspect, the invention relates to a method of testing a vacuum / pressure valve in a valve housing, applying a device for testing the vacuum / pressure relief valve, the device comprising a pipe plug with pressure chamber for gastight placement in a flange connection between the vacuum valve and the outside, the device comprising a pressure gauge for measuring the pressure in the pressure chamber and a compressed gas connection for increasing the pressure in the pressure chamber, the method comprising the step of increasing the pressure in the pressure chamber. This makes it possible to obtain the advantages as described above with regard to the method. The pipe plug, also referred to as a test valve, forms a test space or test area on a first side of the valve to be tested in which the pressure can be set. When testing the operation of a vacuum valve, the pressure in the test area will be an overpressure if the test valve is placed on the outside of the vacuum valve, but will be under pressure when the test valve is placed on the inside of the vacuum valve. By inside is meant the side of the valve which, during operation, communicates with the interior of the valve housing and the storage tank.

In that respect, it is particularly preferred that the pipe plug is designed for direct communication of the pressure chamber with the vacuum valve. This results in a direct effect of the pressure on the vacuum valve, which allows for a quick and accurate test.

Furthermore, a device comprises a housing that is placed against the valve housing around the entrance to the vacuum valve and urged against the housing to provide an airtight seal to the environment, the housing having a pressure gauge and a source for a pressurized gas, also referred to as a pressurized gas source, so that the pressure in the test space can be gradually increased to measure at what pressure in the test space, in particular the pressure difference between the pressure in the test space and the valve housing, the vacuum valve opens.

The invention will be explained in more detail below with reference to a drawing. The drawing shows in:
FIG. 1 a schematic cross-section of a valve housing in side view,
FIG. 2 a representation according to FIG. 1 for carrying out a first part of the method according to the invention,
FIG. 3 a representation according to FIG. 1 for performing a second part of the method according to the invention,
FIG. 4 a front view of part of the valve housing of FIG. 1,
FIG. 5 a side view of part of the valve housing of FIG. 1,
FIG. 6 and 7 a variant of the test room around a valve housing,
FIG. 8 and 9 a variant of the test room around an ERV,
FIG. 10 a variant of a test room around an overpressure valve, and
FIG. 11 and FIG. 12 an application of a flange coupling for applying a pressure difference in a valve housing with respect to the environment.

In the figures the same parts are indicated by the same reference numerals. However, the parts necessary for a practical embodiment of the invention are not all shown, for simplicity of illustration.

FIG. 1 shows a schematic cross section of a valve housing 1 in side view. The valve housing 1 is placed on a roof 2 of a storage tank. Via a pipe 3, the storage space 4 of the tank is in contact with the interior space 5 of the valve housing 1. In the embodiment shown, the valve housing is connected to the pipe 3 by means of a flange 6. The pressure in the valve housing 1 during use of the storage tank, is equal to the pressure in the storage space 4 of the tank.

The valve housing 1 comprises two valves, a vacuum valve 7 and a pressure valve 8. At a predetermined underpressure in the storage tank and the valve housing with respect to the ambient pressure outside the valve housing (a lower pressure difference) the vacuum valve 7 will open to supply pressure from the environment 9 into the storage tank until the pressure is sufficiently equalized. Likewise, the pressure valve 8 will open when the pressure in the storage tank is by a certain order of magnitude higher than the ambient pressure until the pressure is sufficiently equalized. The valves 7, 8 are generally designed as plates 12 and 13 situated on seats 10 and 11, respectively, which serve as safety valves. Because the pressure valve 8 opens outwards and is therefore located outside the valve housing 1, it is usually protected under a cover 14.

According to the invention, the access from the environment 9 to the vacuum valve 7 is closed gas-tight with a valve 15, so that a test space 16 is formed between the valve 15 and the vacuum valve 7. The valve 15 further comprises a pressure gauge 17 for measuring the pressure in the test space 16 and a supply connection 18 for supplying compressed air or the like to the test space 16. With an increasing pressure difference between the pressure in the test space 16 and the valve housing 1 when compressed air is fed into the test space via the supply 18, the vacuum valve 7 will open. This is an indication at which pressure difference the vacuum valve 7 opens in practice. The user will therefore preferably also measure the pressure in the valve housing 1 in order to get a correct indication of the pressure difference. For example, an open fluid communication between the valve housing 1 and the environment 9 can be provided, whereby a differential pressure meter can be used to directly measure and register the pressure difference between the test space 16 and the environment 9, which is then an indication of the pressure difference between the test space 16. and the valve housing 1. For example, the pressure relief valve 8 can be opened, whereby a simple open fluid communication is obtained between the valve housing 1 and the environment 9.

Fig. 2 shows a detailed view of the vacuum valve 7 of the valve housing 1 with a connected pipe plug as shut-off valve 15. The compressed air supply 18 is provided with the pressure gauge 17.

Alternatively, as shown in front view in FIG. 4, a gas-tight housing 19 can be placed on the outside against the valve housing 1 to provide a pressure-tight access to the vacuum valve 7. The housing 19 can be clamped around the valve housing 1 with clamps 20. FIG. 5 shows this variant in schematic side view.

In fig. 3 an embodiment is shown for testing the operation of the pressure valve 8. To this end, in this embodiment, a gastight seal 21 is also placed on the vacuum valve 7 and compressed air is gradually supplied via a supply connection 18 to the internal space 5 of the valve housing 1. The supply to the storage space is closed by means of a plug 23 in a pipe section 22 to the storage tank. The pressure in the valve housing 1 will increase until a relative pressure difference between the interior space 5 of the valve housing 1 and the environment 9 is reached and the pressure valve 8 will open. By measuring and recording both the pressure in the interior space 5 of the valve housing 1 and the ambient pressure, a direct value is obtained of the pressure difference at which the pressure valve 8 will open and an indication of whether the pressure valve 8 is still working properly.

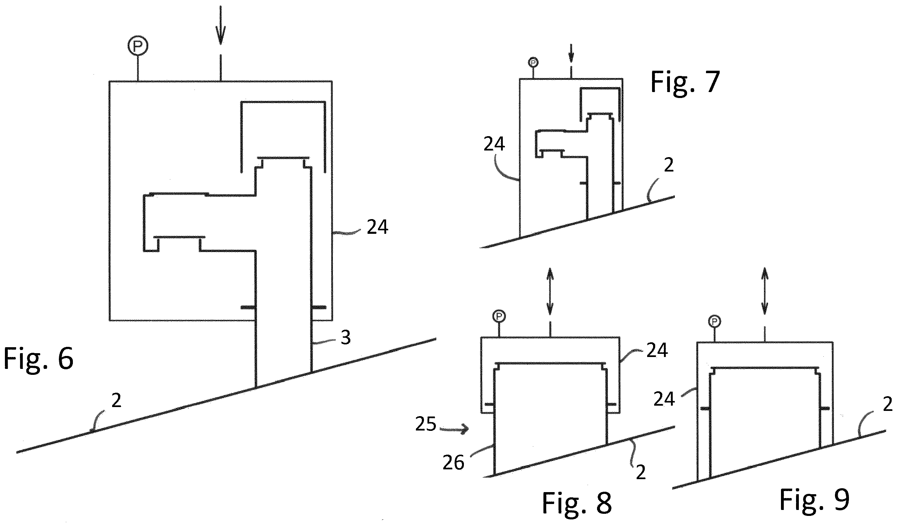

Fig. 6 and 7 show embodiments of a variant in which a housing 24 is placed around the entire valve housing 1. In fig. 6 the housing 24 is closed against the pipe 3, while in Fig. 7 the housing 24 is closed against the roof of the storage tank. Instead of the one shown in Figs. 6, the housing 24 can also be closed against the valve housing, i.e. at a position above the flange 6 (the flange 6 is indicated in Fig. 1). The pressure in the test chamber of housing 24, i.e. the pressure around the valve body, relative to the environment and the pressure in the valve body can be changed to check the behavior of the vacuum valve and the pressure valve. By increasing the pressure in the test space of the housing 24, the vacuum valve can be controlled, while by lowering the pressure in the test space of the housing 24, i.e., applying a relative vacuum in the test space of the housing 24 relative to the environment and pressure in the valve body, the pressure valve can be checked.

FIG. 8 and 9 show such an application of a housing 24 to an ERV 25 (an "emergency relief valve" or "release valve"), two variants being shown: a first in Fig. 8 where the housing 24 is placed around the line 26 of the ERV and in Fig. 9 where the house 24 is placed against the roof 2 of the space to be protected by the ERV. Here too, instead of the one shown in Fig. 8, the housing 24 can also be closed off against the valve housing, i.e. at a position above the flange 6 (the flange 6 is indicated in Fig. 1).

FIG. 10 shows a variant of the method according to the invention, in which a test valve 15 for forming a test space 16 is placed in a valve housing 1 on an inner side of a pressure relief valve 8. By applying an overpressure in the test space 16, the pressure at which the overpressure valve 8 opens can be measured. The absolute pressure measured in the test room 16 can be related to the ambient pressure to determine the relative pressure at which the valve opens.

Fig. 11 shows an illustration in which a pressure source 18 can be placed on an inlet 29 of the valve housing 1. An overpressure or underpressure can be applied to the inside of the valve housing 1 via the pressure source 18. Alternatively, as shown in FIG. 12, a flange 27 with a fluid coupling 28 can be mounted on the valve housing 1. Via the fluid coupling 28, an overpressure or underpressure can be applied to the inside of the valve housing 1. When using the variants according to Fig. 11 and Fig. 12, the connection between the valve housing 1 and the storage space 4 of the storage tank will have to be closed, for example with a plug 23, in order to be able to form a pressure difference between the inside of the valve housing 1 and the environment in a simple and quick manner. Via the pressure source 18, only the volume of the valve housing 1 up to the plug 23 will have to be increased or decreased in pressure to test the valves. The pressure relief valve is tested by applying an overpressure to the inside of the valve housing 1. The vacuum valve is tested by applying a negative pressure in the valve housing 1. Both of these tests can be carried out in rapid succession, provided that the overpressure or underpressure is applied gradually to simulate a practical change in pressure. The pressure at which the pressure no longer decreases or increases any further is the opening pressure of the valve.

The invention also extends to any combination of features described above independently of each other.

The invention is not limited to the embodiments described above and shown in the figures. The invention is limited only by the appended claims.

## Claims

1. A method of testing a valve (7, 8), for example a blowdown valve or a vacuum / pressure relief valve, in a valve housing (1) on a storage tank (4), the valve (7, 8) having a first side and an opposite second side, wherein this method comprises the step of:
- sealing at least the valve (7, 8) to be tested gas-tight on the first side with a test valve (15), forming a test space (16) between the test valve (15) and the valve (7, 8),
- applying an increasing pressure difference between the test space and the second side, and
- measuring and recording the pressure in the test space until the valve (7, 8) is opened,
**characterized in that** the first side is oriented towards the environment (9) outside of the housing (1).

2. A method according to claim 1, comprising the step of:
- sealing at least a part of the valve housing (1) gastight with the test valve (15) from the environment (9), in particular between the environment and the vacuum valve or between the environment and the pressure valve or between the environment and a release valve,
- creating an increasing differential pressure between the test space (16) defined by the test valve (15) and the valve housing (1) and a space on the inside of the valve housing, and
- measuring and recording the pressure in the test space (16) until one of the vacuum valve or the pressure valve or the release valve is opened.

3. A method for testing a vacuum / pressure relief valve (7, 8) having a valve housing (1) located on a storage space (4), the valve housing (1) having an interior space (5), the method comprising the following steps in random order:
I:
- sealing gas-tight from the environment (9) a first side of the vacuum valve (7) in contact with the environment (9) using a test valve (15),
- applying an increasing overpressure in a test space (16) defined by the test valve (15) and the vacuum valve (7) wherein said overpressure is higher than a pressure in the valve housing (1) at a second side of the vacuum valve (7) in contact with the interior space (5) of the valve housing (1), and
- measuring and recording the pressure in the test space (16) until the vacuum valve (7) is opened,
and
II:
- sealing off gas-tight a supply pipe (3) which connects the storage space (4) with the interior space (5) of the valve housing (1),
- applying an increasing overpressure at a second side of the pressure valve (8) in contact with the interior space (5) of the valve housing (1), wherein the overpressure is higher than a pressure at a first side of the pressure valve (8) in contact with the environment (9), and
- measuring and recording the pressure in the interior space (5) of the valve housing (1) until the pressure valve (8) is opened.

4. A method for testing a vacuum / pressure relief valve in a valve housing according to claim 1, 2 or 3, also comprising measuring and recording the pressure in the interior space (5) of the valve housing (1).

5. A method for testing a vacuum / pressure relief valve in a valve housing according to claims 1, 2 or 3, also comprising measuring and recording the pressure in the environment (9) outside the valve housing (1).

6. A method of testing a vacuum / pressure relief valve in a valve housing according to claim 3, comprising shutting off the supply pipe (3) from the interior space (5) of the valve housing (1) where the pressure is to be monitored prior to step I, then performing step I and continuing performing step II.

7. A method of testing a vacuum / pressure relief valve in a valve housing according to claim 3, wherein an access to the vacuum valve (7) comprises a flange connection and wherein the gas-tight sealing with the test valve in step I comprises placing a pipe plug or balloon valve in the flange.

8. A method of testing a vacuum / pressure relief valve according to claim 3, wherein the gas-tight sealing with the test valve (15) in step I comprises placing a pressure-tight housing (24) on the outside of the valve housing (1) around an access to the vacuum valve (7).

9. A method of testing a vacuum / pressure relief valve according to claim 8, further comprising clamping the pressure-tight housing (24) against the valve housing (1).

10. A method of testing a vacuum / pressure relief valve according to claim 9, comprising placing a clamp around the valve housing (24) .

11. A method of testing a vacuum / pressure relief valve in a valve housing according to claim 1 or 2, comprising in-situ testing at least one of a vacuum valve (7) and a pressure valve (8) on a roof of a storage tank (2).

12. A method of testing a vacuum / pressure relief valve in a valve housing according to claim 3, applying a device (15) for testing the vacuum / pressure relief valve, the device (15) comprising a pipe plug with a pressure chamber for gastight placement in a flange connection between the vacuum valve (7) and the outside (9), the device (15) comprising a pressure gauge for measuring the pressure in the pressure chamber and a compressed gas connection for increasing the pressure in the pressure chamber, the method comprising the step of increasing the pressure in the pressure chamber.

13. A method according to claim 12 of testing a vacuum / pressure relief valve in a valve housing according to claim 3, applying the device (15) and wherein the pipe plug is embodied for direct communication of the pressure chamber with the vacuum valve (7).

## Patentansprüche

1. Verfahren zum Testen eines Ventils (7, 8), z.B. eines Abblaseventils oder eines Unterdruck-/Druckentlastungsventils, in einem Ventilgehäuse (1) an einem Lagertank (4), worin das Ventil (7, 8) eine erste Seite und eine abgewandte zweite Seite aufweist, worin das Verfahren die Schritte umfasst:
- gasdichtes Abdichten zumindest des zu prüfenden Ventils (7, 8) auf der ersten Seite mit einem Prüfventil (15) unter Bildung eines Prüfraumes (16) zwischen dem Prüfventil (15) und dem Ventil (7, 8),
- Anlegen einer ansteigenden Druckdifferenz zwischen dem Prüfraum und der zweiten Seite, und
- Erfassen und Aufzeichnen des Drucks in dem Prüfraum, bis das Ventil (7, 8) geöffnet ist,
**dadurch gekennzeichnet, dass** die erste Seite auf die Umgebung (9) außerhalb des Gehäuses (1) ausgerichtet ist.

2. Verfahren nach Anspruch 1, welches den Schritt umfasst:
- gasdichtes Abdichten zumindest eines Teils des Ventilgehäuses (1) mit dem Prüfventil (15) gegenüber der Umgebung (9), insbesondere zwischen der Umgebung und dem Unterdruckventil oder zwischen der Umgebung und dem Druckventil oder zwischen der Umgebung und einem Ablassventil,
- Erzeugen eines ansteigenden Differenzdrucks zwischen dem durch das Prüfventil (15) und das Ventilgehäuse (1) definierten Prüfraum (16) und einem Raum an der Innenseite des Ventilgehäuses, und
- Erfassen und Aufzeichnen des Drucks in dem Prüfraum (16), bis entweder das Unterdruckventil oder das Druckventil oder das Ablassventil geöffnet wird.

3. Verfahren zum Prüfen eines Unterdruck-/Druckentlastungsventils (7, 8) mit einem Ventilgehäuse (1), das auf einem Speicherraum (4) angeordnet ist, worin das Ventilgehäuse (1) einen Innenraum (5) aufweist, **dadurch gekennzeichnet, dass** es das Verfahren die Schritte in beliebiger Reihenfolge umfasst:
I:
- Gasdichtes Verschließen einer ersten Seite des Unterdruckventils (7), die mit der Umgebung (9) in Kontakt steht, gegenüber der Umgebung (9), mit Hilfe eines Prüfventils (15),
- Anlegen eines ansteigenden Überdrucks in einem durch das Prüfventil (15) und das Unterdruckventil (7) definierten Prüfraum (16), worin der Überdruck höher ist als ein Druck im Ventilgehäuse (1) an einer zweiten Seite des Unterdruckventils (7) in Kontakt mit dem Innenraum (5) des Ventilgehäuses (1), und
- Erfassen und Aufzeichnen des Drucks in dem Prüfraum (16), bis das Unterdruckventil (7) geöffnet wird,
und
II:
- gasdichtes Abdichten einer Versorgungsleitung (3), die den Speicherraum (4) mit dem Innenraum (5) des Ventilgehäuses (1) verbindet,
- Anlegen eines ansteigenden Überdrucks an einer zweiten Seite des Druckventils (8) in Kontakt mit dem Innenraum (5) des Ventilgehäuses (1), worin der Überdruck höher ist als ein Druck an einer ersten Seite des Druckventils (8) in Kontakt mit der Umgebung (9), und
- Erfassen und Aufzeichnen des Drucks in dem Innenraum (5) des Ventilgehäuses (1), bis das Druckventil (8) geöffnet wird.

4. Verfahren zum Prüfen eines Unterdruck-/Druckentlastungsventils in einem Ventilgehäuse nach Anspruch 1, 2 oder 3, welches auch das Erfassen und Aufzeichnen des Drucks im Innenraum (5) des Ventilgehäuses (1) umfasst.

5. Verfahren zum Prüfen eines Unterdruck-/Druckentlastungsventils in einem Ventilgehäuse nach Anspruch 1, 2 oder 3, welches auch das Erfassen und Aufzeichnen des Drucks in der Umgebung (9) außerhalb des Ventilgehäuses (1) umfasst.

6. Verfahren zum Prüfen eines Unterdruck-/Druckentlastungsventils in einem Ventilgehäuse nach Anspruch 3, welches vor dem Schritt I das Absperren der Versorgungsleitung (3) von dem Innenraum (5) des Ventilgehäuses (1), in dem der Druck überwacht werden soll, umfasst, und dann Schritt I durchgeführt und mit Schritt II fortgefahren wird.

7. Verfahren zum Prüfen eines Unterdruck-/Druckentlastungsventils in einem Ventilgehäuse nach Anspruch 3, worin ein Zugang zum Unterdruckventil (7) eine Flanschverbindung umfasst und worin die gasdichte Abdichtung mit dem Prüfventil in Schritt I das Einsetzen eines Rohrstopfens oder Ballonventils in den Flansch umfasst.

8. Verfahren zum Prüfen eines Unterdruck-/Druckentlastungsventils nach Anspruch 3, wobei das gasdichte Abdichten mit dem Prüfventil (15) in Schritt I das Anbringen eines druckdichten Gehäuses (24) an der Außenseite des Ventilgehäuses (1) um einen Zugang zum Unterdruckventil (7) herum umfasst.

9. Verfahren zum Prüfen eines Unterdruck-/Druckentlastungsventils nach Anspruch 8, welches weiter das Abklemmen des druckdichten Gehäuses (24) gegen das Ventilgehäuse (1) umfasst.

10. Verfahren zum Prüfen eines Unterdruck-/Druckentlastungsventils nach Anspruch 9, welches das Anlegen einer Klammer um das Ventilgehäuse (24) umfasst.

11. Verfahren zum Prüfen eines Unterdruck-/Druckentlastungsventils in einem Ventilgehäuse nach Anspruch 1 oder 2, welches ein in-situ-Prüfen mindestens eines Unterdruckventils (7) und eines Druckventils (8) auf dem Dach eines Lagertanks (2) umfasst.

12. Verfahren zum Prüfen eines Unterdruck-/Druckentlastungsventils in einem Ventilgehäuse nach Anspruch 3, wobei eine Vorrichtung (15) zum Prüfen des Unterdruck-/Druckentlastungsventils verwendet wird, worin die Vorrichtung (15) einen Rohrstopfen mit einer Druckkammer zum gasdichten Einsetzen in eine Flanschverbindung zwischen dem Unterdruckventil (7) und der Außenseite (9) umfasst, worin die Vorrichtung (15) ein Druckmessgerät zum Erfassen des Drucks in der Druckkammer und einen Druckgasanschluss zum Steigern des Drucks in der Druckkammer umfasst, wobei das Verfahren den Schritt des Steigern des Drucks in der Druckkammer umfasst.

13. Verfahren nach Anspruch 12 zum Prüfen eines Unterdruck-/Druckentlastungsventils in einem Ventilgehäuse nach Anspruch 3 unter Verwendung der Vorrichtung (15), worin der Rohrstopfen zur direkten Verbindung der Druckkammer mit dem Unterdruckventil (7) ausgebildet ist.

## Revendications

1. - Procédé de test d'une soupape (7, 8), par exemple une soupape de purge ou une soupape de dépression/décharge, dans un logement de soupape (1) sur un réservoir de stockage (4), la soupape (7, 8) ayant un premier côté et un second côté, opposé, ce procédé comprenant l'étape :
- sceller au moins la soupape (7, 8) à tester de manière étanche aux gaz sur le premier côté avec une soupape de test (15), formant un espace de test (16) entre la soupape de test (15) et la soupape (7, 8),
- appliquer une différence de pression croissante entre l'espace de test et le second côté, et
- mesurer et enregistrer la pression dans l'espace de test jusqu'à l'ouverture de la soupape (7, 8),
**caractérisé par le fait que** le premier côté est orienté vers l'environnement (9) à l'extérieur du logement (1).

2. - Procédé selon la revendication 1, comprenant l'étape :
- sceller au moins une partie du logement de soupape (1) de manière aux gaz, par rapport à l'environnement (9), avec la soupape de test (15), en particulier entre l'environnement et la soupape de dépression ou entre l'environnement et la soupape de décharge ou entre l'environnement et une soupape de purge,
- créer une pression différentielle croissante entre l'espace de test (16) défini par la soupape de test (15) et le logement de soupape (1) et un espace à l'intérieur du logement de soupape, et
- mesurer et enregistrer la pression dans l'espace de test (16) jusqu'à l'ouverture de l'une de la soupape de dépression, de la soupape de décharge ou de la soupape de purge.

3. - Procédé de test d'une soupape de dépression/décharge (7, 8) ayant un logement de soupape (1) situé sur un espace de stockage (4), le logement de soupape (1) ayant un espace intérieur (5), le procédé comprenant les étapes suivantes dans un ordre aléatoire :
I :
- sceller de manière étanche aux gaz, par rapport à l'environnement (9), un premier côté de la soupape de dépression (7) en contact avec l'environnement (9) à l'aide d'une soupape de test (15),
- appliquer une surpression croissante dans un espace de test (16) défini par la soupape de test (15) et la soupape de dépression (7), ladite surpression étant supérieure à une pression dans le logement de soupape (1) à un second côté de la soupape de dépression (7) en contact avec l'espace intérieur (5) du logement de soupape (1), et
- mesurer et enregistrer la pression dans l'espace de test (16) jusqu'à l'ouverture de la soupape de dépression (7),
et
II :
- sceller de manière étanche aux gaz un tuyau d'alimentation (3) qui relie l'espace de stockage (14) à l'espace intérieur (5) du logement de soupape (1),
- appliquer une surpression croissante à un second côté de la soupape de décharge (8) en contact avec l'espace intérieur (5) du logement de soupape (1), la surpression étant supérieure à une pression à un premier côté de la soupape de décharge (8) en contact avec l'environnement (9), et
- mesurer et enregistrer la pression dans l'espace intérieur (5) du logement de soupape (1) jusqu'à l'ouverture de la soupape de décharge (8).

4. - Procédé de test d'une soupape de dépression/décharge dans un logement de soupape selon la revendication 1, 2 ou 3, comprenant également mesurer et enregistrer la pression dans l'espace intérieur (5) du logement de soupape (1).

5. - Procédé de test d'une soupape de dépression/décharge dans un logement de soupape selon les revendications 1, 2 ou 3, comprenant également mesurer et enregistrer la pression dans l'environnement (9) à l'extérieur du logement de soupape (1).

6. - Procédé de test d'une soupape de dépression/décharge dans un logement de soupape selon la revendication 3, comprenant fermer le tuyau d'alimentation (3) par rapport à l'espace intérieur (5) du logement de soupape (1) où la pression doit être surveillée avant l'étape I, puis mettre en oeuvre l'étape I et mettre en oeuvre de manière continue l'étape II.

7. - Procédé de test d'une soupape de dépression/décharge dans un logement de soupape selon la revendication 3, dans lequel un accès à la soupape de dépression (7) comprend un raccord à bride et sceller de manière étanche aux gaz avec la soupape de test à l'étape I comprend placer un bouchon de tuyau ou une valve à ballonnet dans la bride.

8. - Procédé de test d'une soupape de dépression/décharge selon la revendication 3, dans lequel sceller de manière étanche aux gaz avec la soupape de test (15) à l'étape I comprend placer un boîtier étanche à la pression (24) sur l'extérieur du logement de soupape (1) autour d'un accès à la soupape de dépression (7).

9. - Procédé de test d'une soupape de dépression/décharge selon la revendication 8, comprenant en outre serrer le boîtier étanche à la pression (24) contre le logement de soupape (1).

10. - Procédé de test d'une soupape de dépression/décharge selon la revendication 9, comprenant placer un organe de serrage autour du logement de soupape (1) .

11. - Procédé de test d'une soupape de dépression/décharge dans un logement de soupape selon la revendication 1 ou 2, comprenant tester in situ au moins une parmi une soupape de dépression (7) et une soupape de décharge (8) sur un toit d'un réservoir de stockage (2).

12. - Procédé de test d'une soupape de dépression/décharge dans un logement de soupape selon la revendication 3, appliquant un dispositif (15) pour tester la soupape de dépression/décharge, le dispositif (15) comprenant un bouchon de tuyau avec une chambre de pression pour mise en place de manière étanche aux gaz dans un raccordement à bride entre la soupape de dépression (7) et l'extérieur (9), le dispositif (15) comprenant un manomètre pour mesurer la pression dans la chambre de pression et un raccordement de gaz comprimé pour augmenter la pression dans la chambre de pression, le procédé comprenant l'étape d'augmentation de la pression dans la chambre de pression.

13. - Procédé selon la revendication 12 pour tester une soupape de dépression/décharge dans un logement de soupape selon la revendication 3, appliquant le dispositif (15) et dans lequel le bouchon de tuyau est mis en oeuvre pour une communication directe de la chambre de pression avec la soupape de dépression (7).
